# EUROPÄISCHE PATENTANMELDUNG

(11) **EP 0 984 555 A2**
(43) Veröffentlichungstag der Anmeldung: **08.03.2000**
(21) Anmeldenummer: 99117015.0
(22) Anmeldetag: 30.08.1999
(51) Int. Cl.: H03F 3/72, H03F 1/48, H03F 1/32

(54) **Elektronischer Breitbandverstärker**

(30) Priorität: 01.09.1998 DE 29815598 U
(71) Anmelder: SPAUN-electronic GmbH & Co. KG, D-78224 Singen (DE)
(72) Erfinder: Pyczak, Andreas, 78247 Hilzingen-Twielfeld (DE)
(74) Vertreter: Patentanwälte Westphal, Mussgnug & Partner

(57) **Zusammenfassung**

Elektronischer Breitbandverstärker mit einer zwischen einen Eingangsverstärker (10, 11) und einen Ausgangsverstärker (20, 21) geschalteten Entzerrereinrichtung (15, 16) und Schaltelementen (12) zur Umschaltung der Bandbreite des Breitbandverstärkers, wobei die Entzerrereinrichtung (15, 16) mindestens zwei Entzerrerstufen (15, 16) mit jeweils Ein- und Ausgangsklemmen (12b, 12c; 12e, 12f) aufweist, und daß durch die Schaltelemente (12) entweder die erste Entzerrerstufe (15) oder die zweite Entzerrerstufe (16) zwischen den Eingangsverstärker (10, 11) und Ausgangsverstärker (20, 21) schaltbar ist.

## Beschreibung

Die Erfindung betrifft einen elektronischen Breitbandverstärker gemäß den Merkmalen des Oberbegriffs des Anspruchs 1.

Solche Breitbandverstärker werden insbesondere in Breitbandkabelanlagen zum Verstärken und Entzerren der frequenzabhängigen Dämpfung des Kabelnetzwerkes eingesetzt. Ein Beispiel solcher Breitbandverstärker, welche regelmäßig eine zwischen einen eingangsseitigen und einen ausgangsseitigen Verstärker geschaltete Entzerrereinrichtung aufweisen, ist in DE 43 25 790 C1 beschrieben worden.

Zur Veränderung der Eckfrequenz der Entzerrereinrichtung von beispielsweise 606 Mhz auf 862 Mhz sind mehrere Paare von Reaktanzgliedern und Schaltglieder vorgesehen zum Umschalten zwischen den verschiedenen Paaren von Reaktanzgliedern. Jedes Paar, das aus einem in den Längszweig einschaltbaren Reaktanzglied besteht, ist für eine andere Grenzfrequenz des Übertragungsbereiches ausgelegt. Bei einer nachträglichen Änderung des Freuqenzbereiches braucht lediglich auf das entsprechende Paar von Reaktanzgliedern umgeschaltet zu werden, ohne daß die Reaktanzglieder insgesamt ausgetauscht werden müssen.

Problematisch ist, daß zum Umschalten von einen auf den anderen Übertragungsbereich jeweils immer vier besonders zueinander gekoppelte Schaltelemente bedient werden müssen. Des weiteren müssen die Längs- und Querreaktanzglieder in besonderer Weise aufeinander abgestimmt sein, um den gewünschten Übertragungsbereich sicherzustellen. Dies alles bedeutet einen erhöhten Herstellaufwand.

Andere Möglichkeiten, den Übertragungsbereich von Breitbandverstärkern zu verändern, besteht darin, durch einzelne Module, die in eine Grundschltung des Breitbandverstärkers nach Bedarf eingesteckt werden, den Übertragungsbereich festzulegen. Problematisch hierbei ist die mit dem Austausch der Module bedingte Fehleranfälligkeit der Kontaktanschlüsse. Problematisch ist auch, daß beim Hersteller des Verstärkers diese Module vorgehalten werden müssen, um dem Anwender bei einer Übertragungsbereichsänderung seines Verstärkers das passende Module liefern zu können.

Die Erfindung hat das Ziel, eine weitere Lösung für einen Breitbandversärker mit umschaltbaren Übertragungs- und/oder Verstärkungsbereich bereitzustellen. Hierbei soll der Aufwand an einzusetzenden Schaltmitteln einerseits gegenüber den bekannten Lösungen reduziert und andererseits eine hohe Funktionssicherheit gewährleistet sein.

Dieses Ziel wird durch einen elektronischen Breitbandverstärker mit den Merkmalen des Anspruchs 1 gelöst.

Weiterbildungen der Erfindung sind Gegenstand der Unteransprüche.

Der Breitbandverstärker nach der Erfindung wird nachfolgend anhand eines Ausführungsbeispieles näher erläutert. Es zeigen:
- Fig.1: Die Draufsicht auf ein Gehäuse eines Breitbandverstärkers nach der Erfindung,
- Fig.2: das Blockschaltbild des Breitbandverstärkers von Fig. 1,
- Fig.3: die Schaltungsanordnung einer der von den zwei in dem Breitbandverstärker von Fig.2 eingesetzten Entzerrerstufen,
- Fig.4: einen möglichen Frequenzverlauf des Breitbandverstärkers von Fig.2 ohne Dämpfungsregelung eines in der Entzerrerstufe enthaltenen Pegelstellers, und
- Fig.5: einen möglichen Frequenzverlauf des Breitbandverstärkers von Fig.2 mit maximaler Dämpfungsregelung eines in der Entzerrerstufe enthaltenen Pegelstellers.

In den nachfolgenden Figuren bezeichnen gleiche Bezugszeichen gleiche Teile mit gleicher Bedeutung, sofern nichts anderes angegeben ist.

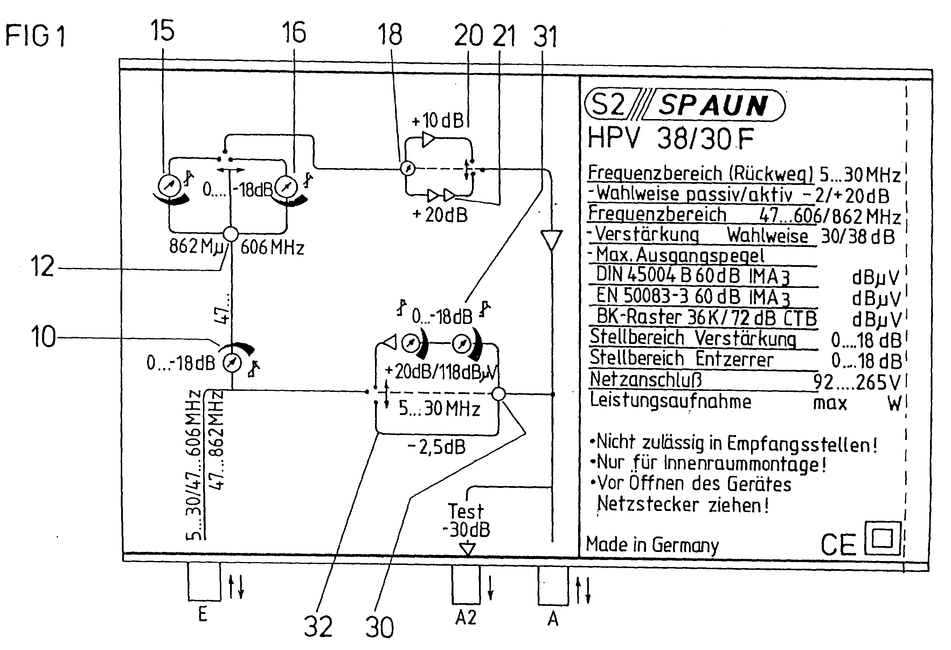

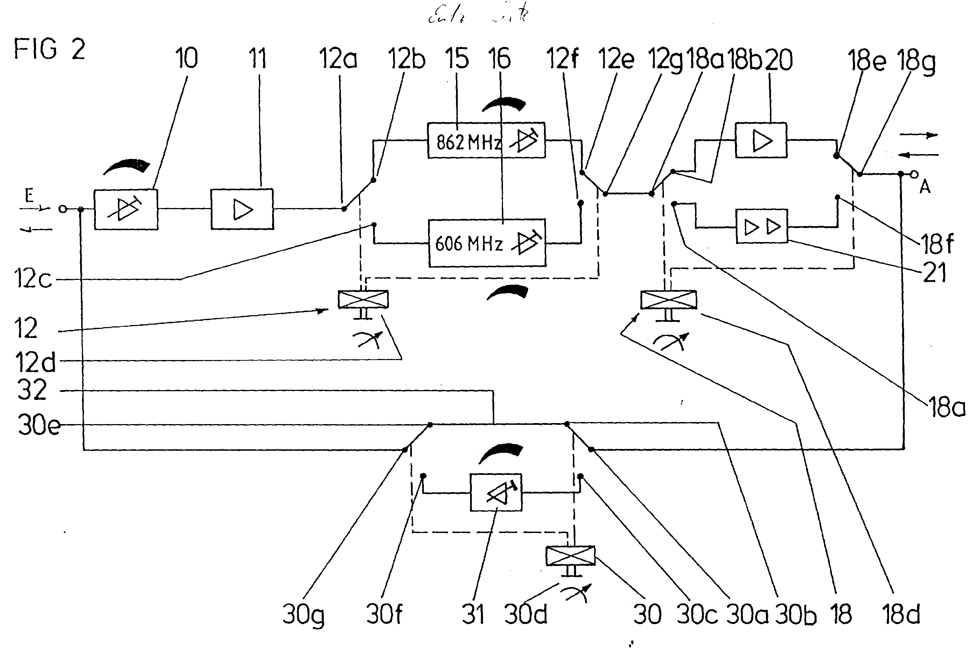

Das in Fig.1 in Draufsicht dargestellte Gehäuse des Breitbandverstärkers weist eine Eingangsklemme E und zwei Ausgangsklemmen A und A2 auf. Im Gehäuse befindet sich eine Schaltungsanordnung, wie in Fig. 2 blockschaltbildlich dargestellt.

An der Eingangsklemme E ist eine Verstärkereinrichtung angeschlossen, die z.B. einen ersten Verstärker 10 mit veränderbaren Dämpfungsfaktor von 0...-18dB aufweist. Diesem Verstärker 10 folgt ein zweiter Verstärker 11, dessen Ausgang mit der Klemme 12a eines Umschalters in Verbindung steht. Diese Klemme 12a ist entweder mit einer Klemme 12b oder 12c verbindbar. Ein weiterer Umschalter verfügt über Klemmen 12e und 12f, die wahlweise an eine Klemme 12g schaltbar sind.

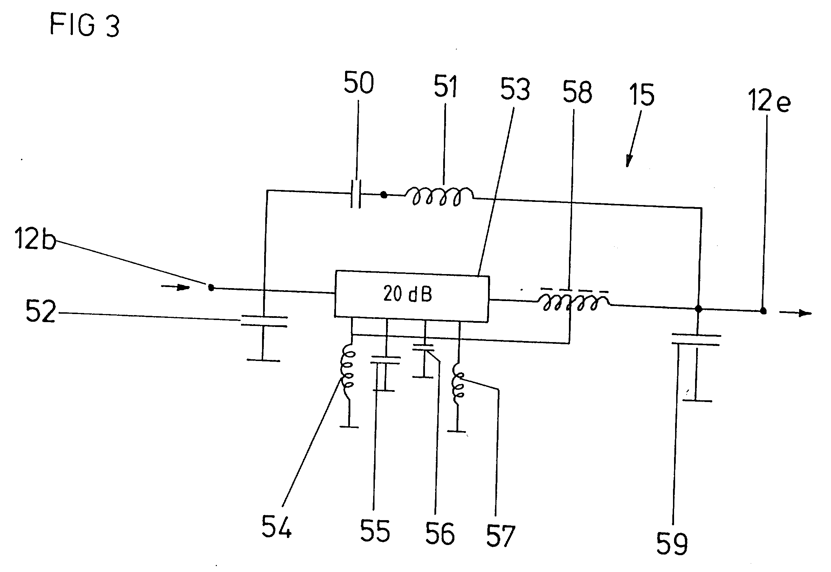

Zwischen die Klemmen 12b und 12e ist eine erste, vollständig aufgebaute Entzerrerstufe 15 geschaltet. Eine zweite Entzerrerstufe 16 ist zwischen die Klemmen 12c und 12f gechaltet. Die beiden Entzerrerstufen 15, 16 unterscheiden sich jeweils durch ihren Übertragungsbereich voneinander. Der Entzerrer 15 weist z.B eine Eckfrequenz von 862 MHz und die zweite Entzerrerstufe 16 eine Eckfrequenz von 606 MHz auf. Vorzugsweise ist in jeder der Entzerrerstufen 15, 16 ein eigener Pegelsteller vorgesehen. Den prinzipiellen Schaltungsaufbau der Entzerrerstufen zeigt Fig. 3, die weiter unten noch erläutert wird.

Die beiden erwähnten Umschalter werden vorzugsweise mechanisch bedient und sind insbesondere Relaiskontakte eines Relais 12. Hierbei sind je nach Ansteuerung die Klemmen 12a mit 12b und 12e mit 12g (wie gezeigt) oder 12a mit 12c und 12f mit 12g in Verbindung.

Die Klemme 12g ist mit einer ausgangsseitigen Vertärkereinrichtung in Kontakt. Der Verstärkungsfaktor dieser Verstärkereinrichtung ist zwischen Werten veränderbar, z.B. zwischen +10dB und +20dB. Dies wird dadurch erreicht, daß eine weitere Umschalteinrichtung 18 mit Klemmen 18a bis 18f vorgesehen ist. Die Klemme 18b ist mit der Klemme 12g in Verbindung und die Klemme 18g mit dem Ausgangsanschluß A. Die Klemme 18a ist wahlweise mit der Klemme 18b oder 18c verbindbar, ebenso die Klemme 18g mit 18e oder 18f.

Zwischen die Klemmen 18b und 18e ist ein erster Verstärker 20 mit einem Verstärkungsfaktor von 10dB und zwischen die Klemmen 18c und 18f ein Verstärker mit einem Verstärkungsfaktior von 20dB schaltbar. Die Umschalteinrichtung 18 ist vorzugsweise ebenfalls ein Relais.

Schließlich weist die Schaltungsanordnung noch einen passiven und aktiven Rückkanal auf, zwischen denen - ebenfalls vorzugsweise durch ein Relais 30 - umgeschaltet werden kann. Hierfür weist die Umschalteinrichtung 30 wiederum eine Vielzahl von Klemmen 30a bis 30g auf, die in der in Fig. 2 dargestellten Weise verschaltet sind.

Sind die Klemmen 30a mit 30b und 30e mit 30g in Verbindung, ist der Ausgangsanschluß A mit dem Eingangsanschluß E durch eine elektrische Leitung 32 direkt in Kontakt. Sind dagegen die Klemmen 30 mit 30c und 30f mit 30g in Kontakt, durchläuft der Rückkanal einen Verstärker mit einstellbaren Verstärkungsfaktor, der z.B. zwischen -2 und +20 dB liegen kann. Der Rückkanal ist optional und kann dazu vorgesehen werden, bestimmte Signale vom Ausgang A an den Eingang E zurückzugeben. Vorteilhaft ist dies z.B. für eine Videoüberwachung, Online-Teilnehmerbefragung von Kabelkunden usw.. Durch geeignete Filtermaßnahmen kann dafür gesorgt werden, daß sich Vorwärts- und Rückkanal nicht negativ beeinflussen.

Der bisher beschriebene Breitbandverstärker zeichnet sich z.B. durch folgende technische Daten aus:

| | |
|---|---|
| Frequenzbereich des Rückkanals: | 5....30 Mhz |
| wahlweise passiv/aktiv: | -2..+20 dB |
| Frequenzbereich des Vor.-kanals: | 47...606 Mhz |
| umschaltbar auf: | 47...862 Mhz |
| Verstärkung: | 30/38 dB |

| Stellbereich | |
|---|---|
| des Eingangsverstärkers: | 0...-18 dB |
| der Entzerrerstufen: | 0...-18 dB. |

Werden die Umschalter 12, 18 und 30 durch Drehschalter und die einstellbaren Verstärkungsfaktoren bzw. Dämpfungsfaktoren durch Drehknöpfe an Potentiometern realisiert, ergibt sich für eine Bedienperson durch jeweilige Dreheinstellung die gewünschte Funktion des Breitbandverstärkers.

Der Breitbandverstärker ist durch entsprechende Betätigung der von außerhalb des Gehäuses zugänglichen Bedienelemente und insbesondere von Drehschaltern und Drehpotentiometern für insgesamt acht verschiedene Einsatzgebiete konfigurierbar, nämlich:

| | |
|---|---|
| 1) | 30dB-Verstärkung/Rückweg passiv/47...606 Mhz |
| 2) | 30dB-Verstärkung/Rückweg aktiv /47...606 Mhz |
| 3) | 30dB-Verstärkung/Rückweg passiv/47...862 Mhz |
| 1) | 30dB-Verstärkung/Rückweg aktiv /47...862 Mhz |
| 5) | 38dB-Verstärkung/Rückweg passiv/47...606 Mhz |
| 6) | 38dB-Verstärkung/Rückweg aktiv /47...606 Mhz |
| 7) | 38dB-Verstärkung/Rückweg passiv/47...862 Mhz |
| 8) | 38dB-Verstärkung/Rückweg aktiv /47...862 Mhz |

In Fig.3 ist das Schaltbild einer geeigneten Entzerrerstufe dargestellt, wie es für die Entzerrerstufen 15 und auch 16 von Fig.2 vorgesehen sein können. Nachfolgend wird beispielhaft die Entzerrerstufe 15 erläutert. Die Stufe weist die Reihenschaltung eines Kondensators 50 und einer Spule 51 auf, die zwischen die Klemmen 12b und 12 e geschaltet sind. Parallel hierzu liegt die Reiheschaltung eines an sich bekannten Pegelstellers 53 und einer Spule 58 mit Mittelabgriff. Die Klemmen 12b und 12e sind jeweils über Blockkondensatoren 52 und 59 an Bezugspotential geschaltet. Schließlich sind weitere Kondensatoren 55, 56 und Spulen 54, 57 mit dem Mittelabgriff der Spule 58 und dem Pegelsteller 53 in Verbindung. Durch geeignete Dimensionierung der Schaltungskomponenten 50 bis 59 ist die Eckfreuqenz des Entzerrers 15 bestimmt.

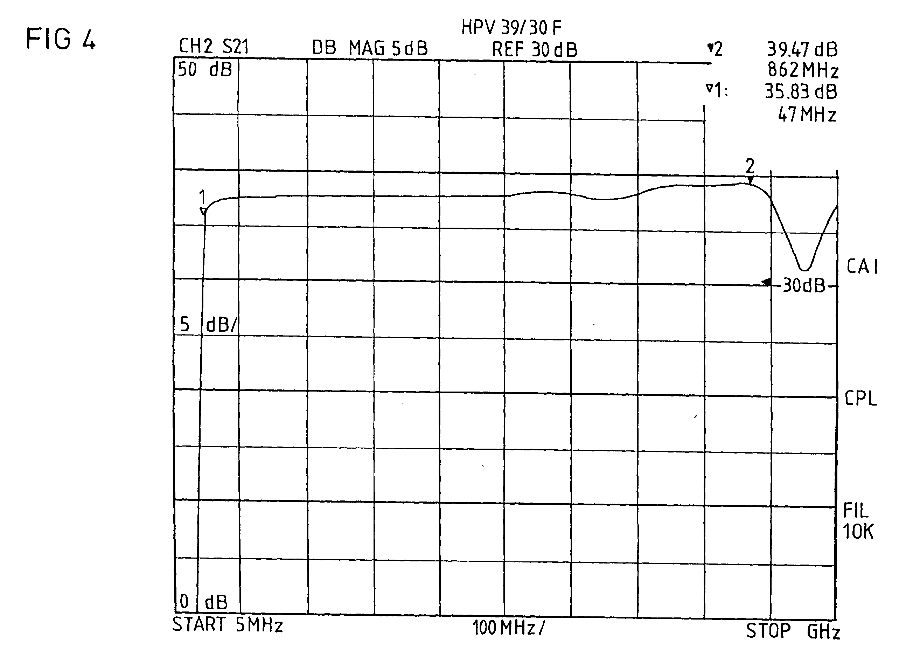

In Fig.4 ist beispielhaft ein möglicher Frequenzverlauf des Breitbandverstärkers von Fig.2 ohne Dämpfungsregelung des in der Entzerrerstufe 15 enthaltenen Pegelstellers 53 gezeigt, wobei angenommen ist, daß durch die Schalteinrichtung 12 der Signalverlauf über die Entzerrerstufe 15 erfolgt. Zusätzlich ist die Verstärkereinrichtung mit den Verstärkern 10, 11 auf 0dB Verstärkungsfaktor eingestellt und der ausgangsseitige Verstärker 21 aktiviert, also die ausgangsseitige Verstärkung +20dB gewählt.

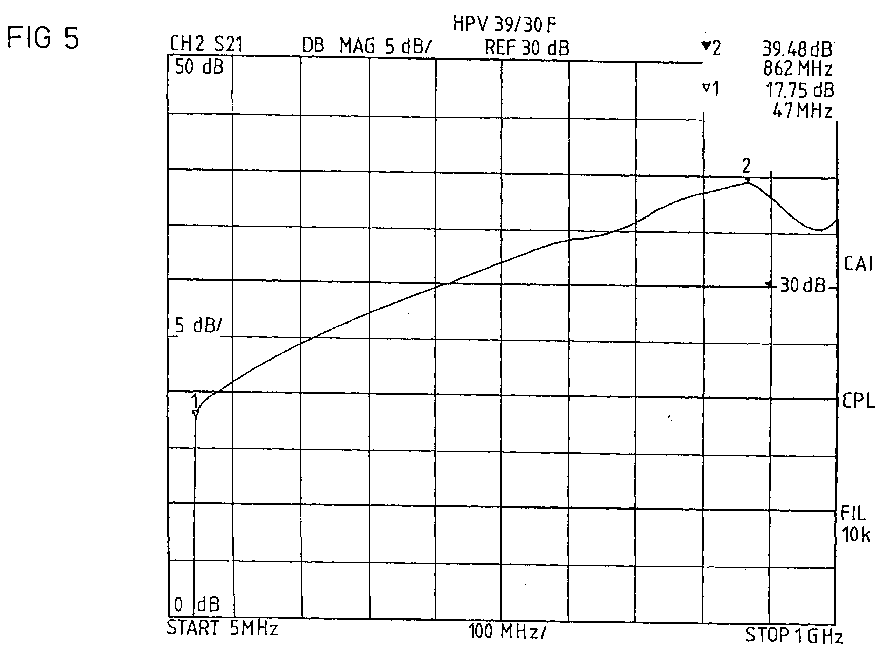

In Fig.5 ist der zugehörende Frequenzverlauf bei maximaler Dämpfungseinstellung des in der Entzerrerstufe 15 enthaltenen Pegelstellers 53 gezeigt unter gleichbleibender eingangs- und ausgangsseitiger Verstärkung dargestellt. Es deutlich der zu tiefen Freuquenzen hin abfallende Dämpfungsverlauf erkennbar.

Wenngleich im Zusammenhang mit den Fig. 1 und 2 des Ausführungsbeispiels eines Breitbandverstärkers von einer in seiner Eckfrequenz umschaltbaren Entzerrereinrichtung sowie einer nachfolgenden in seinem Vestärkungsfaktor umschaltbaren Verstärker und von einem Rückkanal die Rede war, der zwischen passiv und aktiv umgeschaltet werden kann, liegt es auch im Rahmen der Erfindung mindestens einer dieser genannten Komponenten nicht umschaltbar zu gestalten. So kann beispielsweise vorgesehen werden, daß die Entzerrereinrichtung eine einzige Eckfrequenz aufweist und nachfolgend eine Verstärkerstufe mit einem festen Verstärkungsfaktor vorgesehen ist, wobei lediglich der Rückkanal zwischen aktiv und passiv umgeschaltet werden kann. Im Hinblick auf eine möglichst flexible Ausgestaltung des Breitbandverstärkers empfiehlt es sich jedoch, sämtliche genannten Umschalteinrichtungen 12, 18 und 30 tatsächlich vorzusehen.

### Bezugszeichenliste

- 10: Eingangsverstärker
- 11: Vorverstärker
- 12: Relais
- 12a: Umschaltkontakt
- 12: Umschaltkontakt
- 12b: Umschaltkontakt
- 12e: Umschaltkontakt
- 12f: Umschaltkontakt
- 12g: Umschaltkontakt
- 15: erste Entzerrerstufe
- 16: zweite Entzerrerstufe
- 18: Relais
- 18a-18g: Umschaltkontakte
- 20: Verstärker
- 21: Verstärker
- 30: Relais
- 30a-30g: Umschaltkontakte
- 31: Verstärker
- 32: Verbindungsleitung
- E: Eingangsklemme
- A: Ausgangsklemme
- A2: Ausgangsklemme
- 50: Kondensator
- 51: Spule
- 52: Kondensator
- 53: Dämpfungsglied
- 54: Spule
- 55: Kondensator
- 56: Kondensator
- 57: Spule
- 58: Spule mit Magnetkern
- 59: Kondensator

## Patentansprüche

1. Elektronischer Breitbandverstärker mit einer zwischen einen Eingang (E) und einen Ausgang (A) geschalteten Entzerrereinrichtung (15, 16), mit einer Verstärkereinrichtung (20, 21; 31) und mit Schaltelementen (12) zur Umschaltung von Betriebsparametern des Breitbandverstärkers,
**dadurch gekennzeichnet**, daß die Entzerrereinrichtung (15, 16) mindestens zwei Entzerrerstufen (15,16) und/oder die Verstärkereinrichtung (20, 21; 31) Signalpfade mit unterschiedlichen Verstärkungsfaktoren aufweist, und daß durch die Schaltelemente (12) wahlweise die erste Entzerrerstufe (15) oder die zweite Entzerrerstufe (16) zwischen den Eingang (E) und Ausgang (A) schaltbar ist und/oder wahlweise einer der Signalpfade der Verstärkereinrichtung (20, 21; 31) ausgewählt ist.

2. Breitbandverstärker nach Anspruch 1, dadurch gekennzeichnet, daß die erste Entzerrerstufe einen Frequenzbereich von bis zu etwa 606 MHz aufweist.

3. Breitbandverstärker nach Anspruch 1 oder 2, dadurch gekennzeichnet, daß die zweite Entzerrerstufe (16) einen Frequenzbereich von bis zu etwa 862 MHz aufweist.

4. Breitbandverstärker nach einem der Ansprüche 1 bis 3, dadurch gekennzeichnet, daß die Schaltelemente durch ein elektromagnetisches Relais (12) gebildet sind.

5. Breitbandverstärker nach einem der Ansprüche 1 bis 4, dadurch gekennzeichnet, daß die Schaltelemente durch einen Drehknopf am Gehäuse des Breitbandverstärkers bedienbar sind.

6. Breitbandverstärker nach einem der Ansprüche 1 bis 5, dadurch gekennzeichnet, daß die Entzerrerstufen (15, 16) jeweils einen einstellbaren Pegelsteller (53) aufweisen.

7. Breitbandverstärker nach Anspruch 6, dadurch gekennzeichnet, daß die einstellbaren Pegelsteller (53) der Entzerrerstufen (15, 16) durch Drehpotentiometer am Gehäuse des Breitbandverstärkers bedienbar sind.

8. Breitbandverstärker nach einem der Ansprüche 1 bis 7, dadurch gekennzeichnet, daß als Verstärkereinrichtung ein Eingangsverstärker (10, 11) und/oder Ausgangsverstärker (20, 21) mit vorzugsweise umschaltbaren Verstärkungsfaktoren vorgesehen ist.

9. Breitbandverstärker nach Anspruch 8, dadurch gekennzeichnet, daß zur Umschaltung der Verstärkungsfaktoren elekromechanische Relais vorgesehen sind.

10. Breitbandverstärker nach Anspruch 9, dadurch gekennzeichnet, daß die Relais durch einen am Gehäuse des Breitbandverstärkers angeordneten Drehschalter bedienbar sind.

11. Breitbandverstärker nach einem der Ansprüche 1 bi 10, dadurch gekennzeichnet, daß parallel zum Vorwärtskanal zwischen einer Eingangsklemme (E) und einer Ausgangsklemme (A) des Breitbandverstärkers ein Rückkanal geschaltet ist.

12. Breitbandverstärker nach Anspruch 11, dadurch gekennzeichnet, daß der Rückkanal passiv oder aktiv schaltbar ist.

13. Breitbandverstärker nach Anspruch 12, dadurch gekennzeichnet, daß der aktive Rückkanal in seiner Dämpfung variierbar ist.

14. Breitbandverstärker nach Anspruch 13, dadurch gekennzeichnet, daß zur Umschaltung zwischen aktiven oder passiven Rückkanal ein elektromechanisches Relais vorgesehen ist.

15. Breitbandverstärker nach einem der Ansprüche 1 bis 14, dadurch gekennzeichnet, daß dieser zum Anschluß an eine Buchse für ein Breitbandkabelsignal vorbereitet ist.
